(19) **Europäisches Patentamt / European Patent Office / Office européen des brevets**

(11) **EP 2 528 076 B1**

(12) **FASCICULE DE BREVET EUROPEEN**

(45) Date de publication et mention
de la délivrance du brevet:
**20.03.2019 Bulletin 2019/12**

(51) Int Cl.:
**H01G 11/50** *(2013.01)*   **H01G 11/22** *(2013.01)*
**H01G 11/28** *(2013.01)*

(21) Numéro de dépôt: **12167763.7**

(22) Date de dépôt: **11.05.2012**

(54) **Électrode negative pour supercondensateur asymétrique à électrode positive à base d'hydroxyde de nickel et a électrolyte alcalin et son procédé de fabrication**

Negative Elektrode eines asymmetrischen Superkondensators mit positiver Elektrode auf der Basis von Nickelhydroxid und einem alkalinen Elektrolyten, und ihr Herstellungsverfahren

Negative electrode for an asymmetric supercapacitor with nickel hydroxide positive electrode and alkali electrolyte and method for manufacturing same

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2011 FR 1154681**

(43) Date de publication de la demande:
**28.11.2012 Bulletin 2012/48**

(73) Titulaire: **SAFT**
**93170 Bagnolet (FR)**

(72) Inventeurs:
• **Chevalier, Stéphanie**
**33200 Bordeaux (FR)**
• **Dendary, Mélanie**
**33200 Eysines (FR)**
• **Desprez, Philippe**
**33200 Bordeaux (FR)**

(74) Mandataire: **Hirsch & Associés**
**137, rue de l'Université**
**75007 Paris (FR)**

(56) Documents cités:
EP-A1- 2 093 191       EP-A2- 0 750 358
EP-A2- 1 447 867       JP-A- 2007 066 836
US-A1- 2006 068 296    US-A1- 2008 003 503
US-A1- 2009 208 839    US-A1- 2011 014 508

**Description**

DOMAINE TECHNIQUE

Le domaine technique de l'invention est celui des supercondensateurs asymétriques à électrolyte alcalin possédant une électrode positive à base d'hydroxyde de nickel et une électrode négative à base de carbone déposé sur un collecteur de courant.

ETAT DE LA TECHNIQUE

Le système de stockage d'énergie appelé « supercondensateur », également dénommé « supercapacité », ou bien « condensateur à double couche électrochimique », et en anglais « Electric Double Layer Capacitor (EDLC) », ou encore « ultracapacité », et en anglais « ultracapacitor », est un dispositif permettant de stocker de l'énergie par accumulation d'ions sur deux électrodes servant de collecteurs d'ions lorsqu'une différence de potentiel est imposée entre celles-ci. On utilisera le terme « supercondensateur » dans la suite du présent document et il va de soi que ce vocabulaire désigne également les terminologies équivalentes mentionnées ci-dessus. Un supercondensateur électrochimique comprend au moins une électrode positive et au moins une électrode négative. Les deux électrodes sont séparées par un séparateur. Le faisceau électrochimique constitué par l'ensemble des électrodes positives et négatives et des séparateurs est imprégné d'un electrolyte. Généralement, du charbon actif possédant une forte surface spécifique (supérieure à 500 $m^2$/g) est déposé sur la surface des électrodes, ce qui permet d'obtenir de très fortes valeurs de capacité. Un supercondensateur permet de fournir une densité d'énergie de 4 à 6 Wh/kg, qui est environ 40 à 60 fois supérieure à celle d'un condensateur électrolytique. Il existe différentes variantes de supercondensateurs électrochimiques.
Une première variante a été celle des supercondensateurs symétriques à électrolyte aqueux. Dans ce type de supercondensateur, l'électrode positive et l'électrode négative sont constituées de matériaux similaires ayant la même capacité. Il s'agit le plus souvent de charbon actif. La demande de brevet EP-A-1 883 937 décrit la fabrication d'une électrode à base de charbon actif pouvant servir à la conception de supercondensateurs symétriques à électrolyte aqueux.
Une seconde variante est celle des supercondensateurs symétriques à électrolyte non-aqueux. Comme décrit dans le brevet US 6,356,432, le supercondensateur comprend un électrolyte non-aqueux, tel que l'acétonitrile, et deux électrodes de carbone, chaque électrode comprenant un liant et une matière électrochimiquement active constituée de charbon actif dont la surface spécifique est supérieure à 2000 $m^2$/g.
La troisième variante de supercondensateur est celle des supercondensateurs asymétriques, également dénommés supercondensateurs hybrides, à électrolyte aqueux. La demande de brevet EP-A-1 156 500 décrit le principe général de fonctionnement de ce type de supercondensateur. Un tel supercondensateur comprend une électrode négative à base de charbon actif et une électrode positive dont le matériau actif peut subir une oxydation réversible. L'électrode positive se charge par un procédé faradique alors que l'électrode négative se charge par accumulation d'ions à l'interface électrode/électrolyte pour former une double couche. L'accumulation de charges se produisant à l'électrode négative correspond à un procédé non faradique.
Le document WO 2008/067337 décrit une composition pour une électrode pouvant servir dans la conception de supercondensateurs à double couche électrochimique dans laquelle l'électrode positive ou négative est à base de carbone dopé à l'aide de donneurs de type p ou n.
Le brevet US 7,576,971 décrit un supercondensateur asymétrique comprenant une électrode positive à base préférentiellement de dioxyde de manganèse et une électrode négative comprenant un mélange de charbon actif et d'un liant à base de polytétrafluoroéthylène (PTFE).
Le brevet US 6,252,762 décrit un système hybride batterie/supercondensateur comprenant une électrode positive à base de charbon actif et une électrode négative à base d'un composé spinelle de type $Li_4Ti_5O_{12}$.
Le brevet RU 2 296 383 décrit des supercondensateurs asymétriques à électrode positive à base d'hydroxyde de nickel et à électrode négative à base de charbon actif sur un collecteur de courant en fer ou en cuivre.
Le brevet US 5,986,876 concerne des supercondensateurs asymétriques dans lesquels l'électrode positive est à base d'hydroxyde de nickel et l'électrode négative est composée d'un matériau à base de feutrine de carbone.
Le document US 2008/0003503 décrit une électrode à base d'un matériau composite pour accumulateur lithium-ion. Le matériau composite comprend de l'étain ou du silicium ou un alliage d'étain ou de silicium. Ce document divulgue que le collecteur de courant peut présenter une surface rugueuse mais aucune valeur de rugosité n'est mentionnée. Le liant peut comprendre un composé cellulosique (CMC) et un copolymère styrénique (SBR).
Le document US 2006/0068296 décrit un électrolyte non-aqueux destiné à être utilisé dans un accumulateur à électrolyte non aqueux, tel qu'un accumulateur lithium-ion. Ce document décrit un collecteur de courant qui est un feuillard métallique présentant une rugosité supérieure ou égale à 0,2 $\mu$m. L'électrode positive et l'électrode négative de l'accumulateur peuvent comprendre un matériau conducteur, par exemple à base de graphite, et un liant.
Le document JP 2007/066836 décrit un accumulateur alcalin de type nickel-métal hydrurable. La cathode comprend un hydroxyde de nickel et du cobalt et l'anode comprend un alliage capable de stocker de l'hydrogène.

Le document EP-A-0 750 358 décrit un substrat d'électrode comprenant un élément métallique ayant la forme d'une plaque métallique ou d'une feuille métallique, ledit élément métallique ayant été modifié pour lui conférer une forme ondulée, l'épaisseur apparente dudit élément métallique de forme ondulée étant - après avoir été modifié - au moins trois fois supérieure à l'épaisseur dudit élément métallique avant modification. Une couche microscopiquement irrégulière est formée sur chacune des surfaces opposées dudit élément métallique généralement sur toute sa surface, ladite couche microscopiquement irrégulière étant composée de nickel ou de cobalt ou d'un mélange de ceux-ci. Le substrat d'électrode peut être revêtu d'un mélange comprenant de l'hydroxyde de nickel, du graphite, du cobalt et un liant à base d'un copolymère de styrène-butadiène et de carboxyméthylcellulose.

Le document US 2009/0208839 décrit une électrode à base d'hydroxyde de nickel pour accumulateurs, de préférence pour accumulateurs nickel-zinc.

Le document EP-A-1 447 867 décrit une électrode non-frittée pour accumulateur à électrolyte alcalin, tels que les accumulateurs nickel-cadmium, nickel-fluor, nickel-métal hydrurable, nickel-hydrogène. L'électrode comprend de l'hydroxyde de nickel pouvant être mélangé à des particules de carbone. L'électrode comprend un liant qui est un mélange d'un copolymère styrène-acrylate et d'un composé cellulosique choisi parmi la méthylcellulose, la carboxyméthylcellulose, l'hydroxypropylméthylcellulose, l'hydroxypropylcellulose et l' hydroxyéthylcellulo se.

Le document US 2011/0014508 décrit une électrode négative pour accumulateur de type nickel-métal hydrurable. L'électrode négative comprend essentiellement un alliage capable de stocker de l'hydrogène pouvant être mélangé à du carbone et l'électrode positive comprend de l'hydroxyde de nickel. Ce document décrit que la surface externe de l'électrode présente une rugosité supérieure ou égale à $3,5~\mu m$.

Le document EP-A-2 093 191 décrit un charbon actif obtenu par activation d'un composé spécifique avec un hydroxyde de métal alcalin, ledit composé spécifique étant obtenu par exemple par condensation déhydratation d'un résorcinal et d'un aldéhyde en utilisant un catalyseur acide. Il est dit que le charbon actif présente une capacité électrostatique élevée et qu'il peut être utilisé dans l'électrode d'un condensateur électrique double couche.

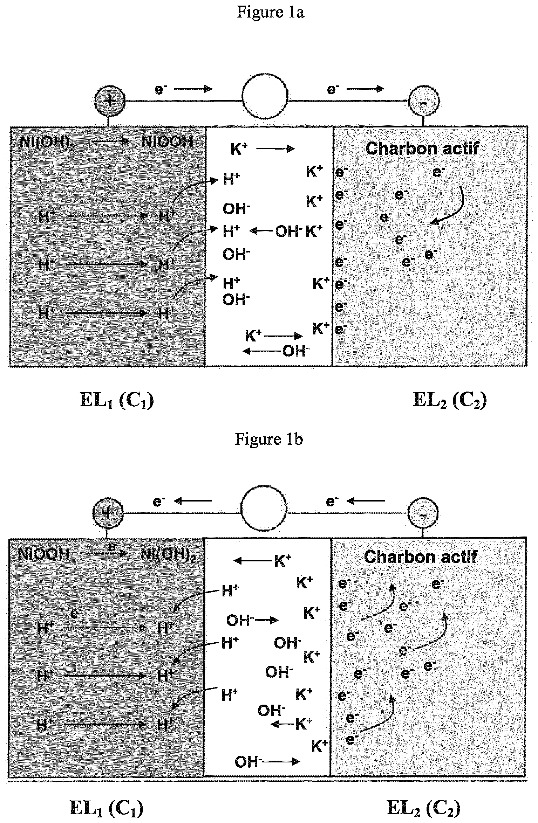

La présente invention concerne plus particulièrement, mais pas de manière exclusive, cette troisième variante de supercondensateurs dont le principe de fonctionnement est schématiquement représenté aux figures 1a et 1b. Ces figures sont la schématisation d'un exemple de supercondensateur asymétrique dans lequel l'électrode positive $EL_1$ de capacité $C_1$ est une électrode à base d'hydroxyde à base de nickel et l'électrode négative $EL_2$ de capacité $C_2$ est une électrode à base de charbon actif. La matière électrochimiquement active positive est un hydroxyde à base de nickel. On entend par "hydroxyde à base de nickel" un hydroxyde de nickel, un hydroxyde contenant principalement du nickel, mais également un hydroxyde de nickel contenant au moins un hydroxyde syncristallisé d'un élément choisi par exemple parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

Les électrodes positive et négative sont séparées par un séparateur qui est une membrane poreuse imbibée d'électrolyte alcalin tel que KOH, et/ou NaOH, et/ou LiOH. La capacité $C_1$ de l'électrode positive est proportionnelle à la quantité d'hydroxyde à base de nickel. La capacité $C_2$ de l'électrode négative provient de la formation d'une double couche électrostatique à l'interface charbon actif/électrolyte. Cette double couche est constituée d'une part de l'accumulation des ions $K^+$ de l'électrolyte adsorbés à la surface du charbon actif et d'autre part de l'accumulation d'électrons $e^-$ dans le charbon actif venant compenser la charge électrostatique positive créée par l'adsorption des ions $K^+$. La capacité $C_2$ est proportionnelle à la surface spécifique du charbon actif. Le mouvement des ions $K^+$ et $OH^-$ de l'électrolyte a été représenté lors d'une charge (figure 1a) et lors d'une décharge (figure 1b).

Un supercondensateur asymétrique présente plusieurs avantages par rapport à un supercondensateur symétrique.

D'une part, il présente une capacité supérieure. En effet, soit $C_T$ la capacité d'un supercondensateur, on a la relation : $1/C_T = 1/C_1 + 1/C_2$. Dans le cas d'un supercondensateur symétrique, on a $C_1=C_2$ d'où $C_T=C_1/2=C_2/2$. La capacité d'un supercondensateur asymétrique est donc égale à la moitié de la capacité d'une des électrodes. Dans le cas d'un supercondensateur asymétrique, la capacité $C_1$ de l'électrode à base d'hydroxyde de nickel est largement supérieure à la capacité $C_2$ de l'électrode à base de charbon actif; d'où la relation $C_1 \gg C_2$ et $C_T=(C_1 \times C_2)/(C_1+C_2) \approx (C_1 \times C_2)/C_1 \approx C_2$. La capacité d'un supercondensateur asymétrique est donc environ égale à la capacité la plus faible $C_2$, soit un gain de capacité d'un facteur 2 par rapport à un supercondensateur symétrique.

D'autre part, un supercondensateur asymétrique à électrolyte aqueux peut fournir une tension de l'ordre de 1,7 à 1,8V alors qu'un supercondensateur symétrique ne peut généralement fournir qu'une tension inférieure à 0,9V, d'où un gain d'énergie par rapport aux supercondensateurs symétriques.

Un inconvénient des supercondensateurs asymétriques de l'état de la technique est que leur montage requiert l'emploi d'un matériau tissé de charbon actif, tel qu'une feutrine ou des fibres tissées de carbone. Le matériau tissé de charbon actif est enroulé autour du collecteur de courant de l'électrode négative. Le montage du supercondensateur asymétrique est compliqué puisqu'il nécessite la manipulation et l'empilement de trois pièces : une électrode positive, un collecteur de courant et un tissé de carbone, ce dernier devant être enroulé autour du collecteur de courant.

Un autre inconvénient des supercondensateurs asymétriques de l'état de la technique provient de l'emploi de PTFE comme liant de l'électrode négative. Les matières actives à base de carbone utilisées dans l'état de la technique sont mélangées à du polytétrafluoroéthylène (PTFE). Or, le PTFE mélangé à la matière active à base de carbone donne un mélange ayant l'aspect d'un latex, qui ne présente pas une bonne tenue mécanique sur le collecteur de courant. On observe une perte de conductivité entre le collecteur de courant et le mélange entraînant une chute de la capacité au cours du fonctionnement du supercondensateur.

Le but de l'invention est de mettre à disposition un supercondensateur asymétrique plus facile à fabriquer, de par l'absence de tissé ou feutre de carbone.

RESUME DE L'INVENTION

L'invention a pour objet une électrode de supercondensateur comprenant un collecteur continu de courant où 50% ou plus de la surface dudit collecteur présente une rugosité Ral comprise entre 0,8 et 15 $\mu$m, mesurée pour une longueur de base comprise entre 2 et 200 $\mu$m, ce collecteur étant revêtu d'un mélange comprenant :

a) du charbon actif ayant une surface spécifique supérieure ou égale à 500 $m^2/g$ ;
b) un liant comprenant un mélange d'au moins un composé cellulosique et au moins un copolymère styrénique.

On entend par « collecteur de courant » un feuillard métallique conducteur électronique.
Le collecteur continu de courant présente une rugosité Ral comprise entre 0,8 et 15 $\mu$m sur 50% ou plus de sa surface de manière à favoriser l'adhérence du mélange sur l'ensemble de la surface du collecteur.
On entend par « revêtu », un recouvrement de l'essentiel de la surface du collecteur.
La rugosité est mesurée à partir de coupes transversales d'un collecteur de courant et correspond à la moyenne arithmétique des valeurs absolues de l'ordonnée y, entre chaque point de la courbe, et l'axe Ox.
Selon un mode de réalisation de l'invention, la rugosité Ral est comprise entre 1 et 5 $\mu$m, de préférence entre 1,2 et 3 $\mu$m.
De préférence, le collecteur de courant présente également sur au moins 50% de sa surface une rugosité Ra2 comprise entre 0,1 et 0,5 $\mu$m, mesurée pour une longueur de base supérieure ou égale à 0,1 $\mu$m et strictement inférieure à 2 $\mu$m.
Selon un mode de réalisation, 75% ou plus, de préférence 90% ou plus, de préférence encore, 95% ou plus de la surface de collecteur de courant présente une rugosité Ral comprise entre 0,8 et 15 $\mu$m.
De préférence, le charbon actif présente une surface spécifique supérieure ou égale à 1000 $m^2/g$, de façon plus préférentielle supérieure ou égale à 1400 $m^2/g$.
Selon un mode de réalisation, le mélange comprend également un composé carboné autre que du charbon actif, choisi dans le groupe comprenant le noir de carbone, le carbone vitreux, le brai de pétrole et le graphite.
De préférence, le matériau du collecteur continu de courant est choisi parmi le nickel, ou un alliage à base de nickel, le cuivre, ou un alliage à base de cuivre, l'aluminium, ou un alliage à base d'aluminium, l'acier inox et l'acier nickelé, de préférence le nickel ou un alliage à base de nickel.
Dans un mode préféré de réalisation, le liant consiste essentiellement en un mélange d'au moins un composé cellulosique et au moins un copolymère styrénique.
Selon un mode préféré de réalisation, le composé cellulosique est choisi dans le groupe comprenant l'hydroxypropylméthylcellulose (HPMC), la carboxyméthylcellulose (CMC), l'hydroxypropylcellulose (HPC) et l'hydroxyéthylcellulose (HEC).
Selon un mode de réalisation, le copolymère styrénique est un copolymère bloc styrénique choisi dans le groupe comprenant le Styrène-Butadiène (SBR), Styrène-Isoprène (SI), Styrène-éthylène/butylène (SEB), Styrène-Isoprène/butylène (SIB), Styrène-éthylène/propylène (SEP), Styrène-Butadiène-Styrène (SBS), Styrène-Isoprène-Styrène (SIS), Styrène-éthylène/butylène-Styrène (SEBS), Styrène-Isoprène/butylène Styrène (SIBS) et Styrène-éthylène/propylène-Styrène (SEPS).
Selon un mode de réalisation, le copolymère styrénique est le polystyrène acrylate (PSA).
De préférence, le liant ne contient pas de polytétrafluoroéthylène (PTFE).
Selon un mode de réalisation, le copolymère bloc styrénique est le Styrène-Butadiène (SBR) et le composé cellulosique est l'hydroxypropylméthylcellulose (HPMC).
Selon un mode de réalisation de l'invention, le mélange comprend de 60 à 93% en poids de charbon actif, de 5 à 20% en poids de noir de carbone, de 1 à 10% en poids de composé cellulosique et de 1 à 10 % en poids de copolymère styrénique.

EP 2 528 076 B1

Selon un mode de réalisation, une couche d'accrochage comprenant du carbone est présente entre le collecteur de courant et le mélange.
L'invention a également pour objet un supercondensateur asymétrique comprenant :

a) au moins une électrode positive comprenant un hydroxyde à base de nickel et un collecteur de courant à base de nickel ;
b) au moins une électrode négative selon l'invention ;
c) un électrolyte alcalin ;
d) au moins un séparateur.

Selon un mode de réalisation, le séparateur comprend un matériau non-tissé en polypropylène et éventuellement une membrane en polyéthylène greffé par des groupements acide acrylique.
L'invention a également pour objet un procédé de fabrication d'une électrode telle que décrite ci-avant, le procédé comprenant les étapes suivantes :

a) mise à disposition d'un collecteur continu de courant dont au moins 50% de sa surface présente une rugosité comprise entre 0,8 et 15 $\mu$m, mesurée pour une longueur de base comprise entre 2 et 200 $\mu$m ;
b) mélange de charbon actif de surface spécifique supérieure ou égale à 500 m$^2$/g avec :

- un liant comprenant un mélange d'au moins un composé cellulosique et au moins un copolymère styrénique et
- de l'eau jusqu'à obtention d'une pâte ;

c) dépôt de la pâte obtenue à l'étape b) sur le collecteur de courant de l'étape a);
d) compression ou calandrage du collecteur de courant revêtu de la pâte pour former une électrode ;
e) séchage de l'électrode obtenue à l'étape d).

Le collecteur de courant de l'électrode négative selon l'invention présente une rugosité Ra particulière permettant l'obtention d'une électrode présentant des propriétés améliorées :
En effet, il y a une coopération inattendue entre la rugosité particulière et le choix du mélange. Le choix de la rugosité Ra dans une gamme spécifique associé au choix spécifique d'un liant de la matière active permet d'avoir une bonne adhérence de la matière active sur le collecteur de courant. Cette bonne adhérence permet une meilleure durée de vie de l'électrode et permet d'obtenir un supercondensateur ayant une meilleure capacité.
Un avantage de l'invention est de mettre à disposition un supercondensateur asymétrique présentant une capacité supérieure ou égale à celle d'un supercondensateur asymétrique dont l'électrode négative comprend un collecteur de courant lisse ou perforé.
Un autre avantage de l'invention est de fournir un supercondensateur asymétrique présentant une capacité supérieure ou égale à celle d'un supercondensateur asymétrique dont l'électrode négative comprend du PTFE comme liant en mélange avec la matière active.
Dans l'électrode de l'invention, le collecteur de courant est revêtu d'un mélange selon l'invention, ce qui permet d'éviter d'avoir recours à l'utilisation de PTFE et de feutre de carbone. Les supercondensateurs asymétriques de l'invention permettent d'obtenir de bonnes capacités massique et volumique, à savoir supérieure à 70 F/g et supérieure à 45 F/cm$^3$ respectivement. Le procédé de fabrication du supercondensateur asymétrique de l'invention est simplifié en comparaison à celui d'un supercondensateur comprenant une électrode négative dans laquelle le tissé de charbon actif constitue une pièce à elle-seule qui doit être enroulée en accordéon autour du collecteur de courant. Le montage du faisceau électrochimique de l'invention est simplifié puisqu'il s'agit d'un empilement classique de plaques.
Par ailleurs, dans l'invention le coût de la matière active de l'électrode négative est réduit puisqu'un tissé de charbon actif utilisé dans l'art antérieur est beaucoup plus cher que de la poudre de charbon actif. En effet, le tissé de charbon actif coute environ 210 USD/kg soit environ 21 USD par supercondensateur à 10 000 F délivrant 1,3V alors que la poudre de charbon actif ne coûte que 16 à 60 USD/kg soit 1,6 à 6 USD par supercondensateur.
D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES FIGURES

Les figures 1a et 1b sont les représentations schématiques du mouvement des ions lors du fonctionnement d'un supercondensateur asymétrique à électrode positive à hydroxyde à base de nickel et à électrolyte alcalin respectivement lors d'une charge, puis lors d'une décharge.

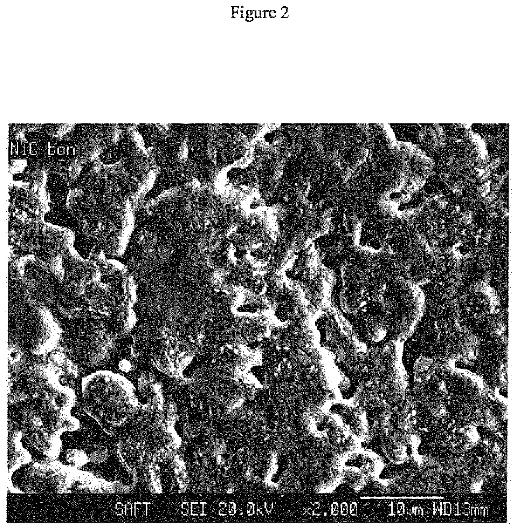

La figure 2 est une photo de l'électrode selon l'invention prise à l'aide d'un microscope électronique à balayage.

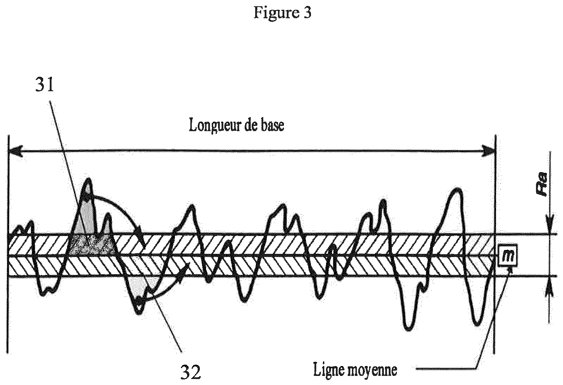

La figure 3 est un schéma définissant le paramètre de rugosité Ra. La rugosité Ra est mesurée en répartissant de manière uniforme les aires supérieures et inférieures autour de la ligne moyenne m sur une longueur de base. La rugosité Ra est égale à la hauteur de la bande obtenue. La relation suivante est alors vérifiée :

$$\Sigma \text{ aires des creux} = \Sigma \text{ aires des saillies} = \tfrac{1}{2}\, Ra \times \text{longueur de base}$$

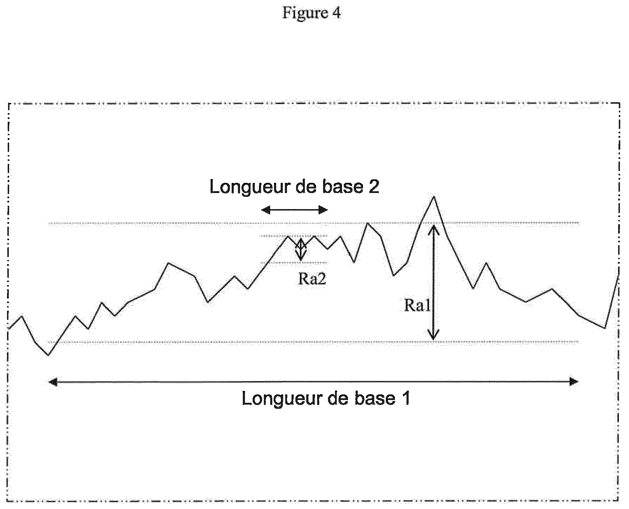

La figure 4 est une représentation schématique de la surface d'un collecteur de courant sur laquelle sont représentées les mesures des rugosités primaire Ra1 et secondaires Ra2. La rugosité primaire est définie et mesurée pour une longueur de base comprise entre 2 et 200 $\mu$m. La rugosité secondaire est définie et mesurée pour une longueur de base supérieure ou égale à 0,1 $\mu$m et strictement inférieure à 2 $\mu$m, de préférence de 0,1 à 1,5 $\mu$m, de préférence encore de 0,1 à 1 $\mu$m.

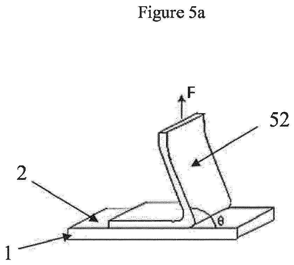

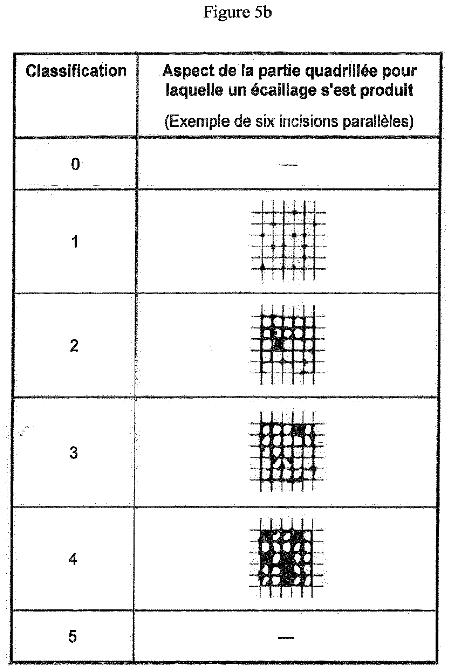

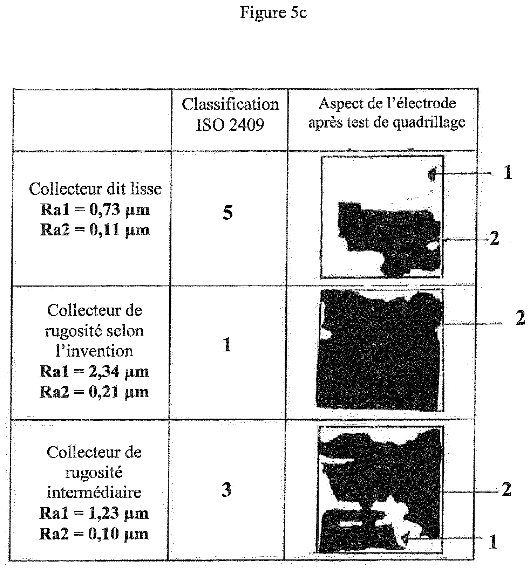

Les figures 5a, 5b et 5c représentent le principe et les résultats du test d'adhérence ou test de quadrillage effectué sur différents collecteurs de courant 1 à base de nickel revêtus du mélange 2 selon l'invention. La figure 5a est une représentation schématique du principe du test. La figure 5b donne la classification selon la norme NF EN ISO 2409 obtenue en fonction de l'aspect de la partie quadrillée après le test. La figure 5c montre les résultats de ce test d'adhérence, avec une image de la surface de l'électrode après le test ainsi que la classification selon la norme NF EN ISO 2409 des différents collecteurs de courant. La classification selon la norme NF EN ISO 2409 est décrite en complément dans le tableau 1 suivant :

Tableau 1 : Description de la classification selon la norme NF EN ISO 2409

| Classification | Description |
|---|---|
| 0 | Les bords des incisions sont parfaitement lisses ; aucun des carrés du quadrillage ne s'est détaché. |
| 1 | Détachement de petites écailles du revêtement aux intersections des incisions. Moins de 5% de la zone quadrillée est affectée. |
| 2 | Le revêtement s'est écaillé le long des bords et/ou aux intersections des incisions. La zone quadrillée est affectée sur plus de 5% mais sur moins de 15%. |
| 3 | Le revêtement s'est écaillé le long des bords des incisions en partie ou en totalité en larges bandes et/ou s'est écaillé en partie ou en totalité en divers endroits des quadrillages. Une zone quadrillée de plus de 15% mais de moins de 35% est affectée. |
| 4 | Le revêtement s'est écaillé le long des bords des incisions en larges bandes et/ou quelques carrés se sont détachés en partie ou en totalité. Une zone quadrillée de plus de 35% mais de moins de 65% est affectée. |
| 5 | Tous les degrés d'écaillage qui ne peuvent pas être classés selon la classification 4. |

La figure 6 représente des courbes de mesure de la capacité volumique (F/cm$^3$) de différentes électrodes en fonction de la densité de courant en décharge (mA/cm$^2$).

La figure 7 représente des courbes de mesure de la capacité massique (F/g) de différentes électrodes en fonction de la densité de courant en décharge (mA/cm$^2$).

Les courbes 61 et 71 ont été obtenues à partir d'une électrode possédant un revêtement avec HPMC et SBR sur un collecteur de courant selon l'invention présentant une rugosité élevée (Ra1 = 2,34 $\mu$m). Les courbes 62 et 72 ont été obtenues à partir d'une électrode possédant un revêtement avec HPMC et SBR sur un collecteur de courant dit lisse. Les courbes 63 et 73 ont été obtenues à partir d'une électrode possédant un revêtement avec HPMC et SBR sur un collecteur de courant selon l'invention présentant une rugosité plus faible (Ra1 = 1,23 $\mu$m). Les courbes 64 et 74 ont été obtenues à partir d'une électrode avec un revêtement à base de PTFE sur un collecteur de courant selon l'invention présentant une rugosité élevée (Ra1 = 2,34 $\mu$m)

EXPOSE DES MODES DE REALISATION DE L'INVENTION

Selon l'invention, les supercondensateurs asymétriques comprennent au moins une électrode positive comprenant une matière active principalement constituée d'hydroxyde à base de nickel, au moins une électrode négative comprenant un mélange d'une matière active à base de carbone et de liant, un électrolyte alcalin et au moins un séparateur.

L'électrode positive comprend un collecteur de courant et une matière active principalement constituée d'hydroxyde à base de nickel.

La matière électrochimiquement active positive est un hydroxyde à base de nickel. On entend par "hydroxyde à base de nickel" un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

Le collecteur de courant de cette électrode positive est en nickel, par exemple un fritté de nickel adapté aux applications de puissance, c'est-à-dire que le courant de décharge peut dépasser 500A pour un supercondensateur unitaire.

L'électrode négative comprend un collecteur de courant et une matière active à base de carbone. La surface du collecteur de courant est continue, c'est-à-dire qu'elle ne comprend pas de perforation. Le collecteur de courant est choisi parmi les métaux suivants : nickel, alliage à base de nickel, cuivre, alliage à base de cuivre, aluminium, alliage à base d'aluminium, acier inox, acier nickelé. Il présente sur 50% ou plus de sa surface une rugosité primaire Ra1 comprise entre 0,8 et 15 $\mu$m et de préférence une rugosité secondaire Ra2, sur 50% ou plus de sa surface, comprise entre 0,1 et 0,5 $\mu$m. De préférence, la rugosité primaire est comprise entre 1 et 5 $\mu$m, de préférence entre 1,2 et 3 $\mu$m. La rugosité est mesurée à l'aide d'un microscope confocal à balayage de la marque LASERTEC. La méthode d'obtention de l'image est connue de l'homme du métier. Tomovich, Peng, Yuan et Yan ont publié un chapitre « Quantitative Surface Characterisation Using Laser Scanning Confocal Microscopy » dans l'ouvrage « Laser Scanning, Theory and Applications » édité par Chau-Chang Wang, décrivant le principe du microscope confocal à balayage, avec notamment son utilité pour la caractérisation des surfaces. La surface est balayée par un rayon laser, concentré par une lentille. Un diaphragme variable ou sténopé est placé devant le détecteur, dans le plan focal conjugué au plan focal de l'objectif. Ainsi, seuls les photons provenant du plan focal passent le sténopé et participent à la formation de l'image. Une succession de coupes est obtenue en faisant varier le plan focal, permettant d'obtenir l'état de la surface dans les trois dimensions de l'espace. La rugosité est mesurée, comme le montre la figure 3, en répartissant de manière uniforme les aires supérieures et inférieures autour de la ligne moyenne m. La rugosité Ra est égale à la hauteur de la bande obtenue. En effet, la relation suivante est vérifiée :

$$\Sigma \text{ aires des creux } (32) = \Sigma \text{ aires des saillies } (31) = \tfrac{1}{2} \text{ Ra} \times \text{ longueur de base}$$

Au regard de la relation ci-dessus, la valeur de rugosité Ra est indépendante de la longueur de base. Les rugosités primaires et secondaires définissent deux échelles de mesure de la rugosité. En effet, la rugosité primaire Ra1 est définie pour une longueur de base comprise entre 2 et 200 $\mu$m, alors que la rugosité secondaire Ra2 (ou « microrugosité ») est définie pour une longueur de base supérieure ou égale à 0,1 $\mu$m et strictement inférieure à 2 $\mu$m, de préférence de 0,1 à 1,5 $\mu$m, de préférence encore de 0,1 à 1 $\mu$m.

La rugosité primaire Ra1 telle que définie dans l'invention peut être mesurée selon la norme ISO 4287. Dans la norme ISO 4287, la longueur de base est désignée sous le nom de « largeur moyenne des éléments du profil » et est notée Rsm.

La rugosité spécifique du collecteur de courant a pour effet d'améliorer l'adhérence de la matière active sur ce collecteur. Une bonne adhérence de la matière active sur le collecteur de courant permet d'assurer à l'électrode une longue durée de vie et de bonnes performances, à savoir une bonne capacité. Le collecteur de courant peut être obtenu par un procédé de frittage de poudre (de nickel par exemple) à une température comprise entre 800°C et 1300°C, comme décrit par P. P. Bhattacharjee et al dans Scripta Materialia 56 (2007), 13-16. Le contrôle de la température de frittage permet d'ajuster la valeur de la rugosité primaire Ra1. En effet, la rugosité primaire Ra1 décroît lorsque la température de frittage augmente. Dans les exemples selon l'invention du tableau 2, le collecteur de courant possédant une rugosité de 2,34 $\mu$m, est obtenu à partir d'une poudre de nickel de diamètre $D_{50}$ de 10 à 20 $\mu$m par frittage à une température comprise entre 800°C et 1000°C et le collecteur de courant possédant une rugosité de 1,23 $\mu$m, est obtenu à partir d'une poudre de nickel de diamètre $D_{50}$ de 10 à 20 $\mu$m par frittage à une température comprise entre 1100°C et 1300°C.

La matière active de l'électrode négative comprend du charbon actif présentant une surface spécifique supérieure ou égale à 500 m$^2$/g, de préférence supérieure ou égale à 1000 m$^2$/g, de façon préférentielle supérieure ou égale à 1400 m$^2$/g.

La surface spécifique (encore appelée surface développée) est mesurée par la technique BET par adsorption d'azote par l'échantillon de poudre de charbon actif à une température donnée, ici la température de l'azote liquide, soit -196°C. La surface spécifique d'une poudre est mesurée comme suit. On prélève un échantillon de poudre dont la masse est comprise entre 0,1 et 1g. Pour une bonne précision de mesure, il convient d'avoir une surface spécifique d'au moins environ 1 m$^2$/g. On utilise une cellule de 10 cm$^3$. On pèse l'ensemble de la cellule de mesure. Puis on ajoute l'échantillon dans la cellule. On pèse l'ensemble. On met en place la cellule de mesure sur un poste de dégazage et on dégaze l'échantillon pendant 12 heures à 120°C. La cellule est rapidement bouchée avec un bouchon après le dégazage. On pèse l'ensemble après retour de la température à l'ambiante et on note le résultat. Toutes les pesées sont effectuées sans le bouchon. La masse de l'échantillon est obtenue par soustraction de la masse de la cellule à la masse de la cellule + échantillon dégazé.

L'analyse de l'échantillon est ensuite réalisée à l'aide d'un analyseur Belsorp Mini de Bel Japan Inc. La mesure repose sur l'adsorption d'azote par l'échantillon à une température donnée, ici la température de l'azote liquide, soit -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 5 mesures sur une poudre de surface spécifique 65 m$^2$/g est de 2,5. Deux fois par an, un contrôle est réalisé avec une poudre de référence, ici l'alumine de référence micrometrics 16822.

De préférence, la matière active comprend également un composé carboné autre que du charbon actif, choisi parmi le noir de carbone, le carbone vitreux, le graphite et le brai de pétrole. La matière active est mélangée à un liant. Ce liant confère d'une part à la matière active de l'adhérence sur le collecteur de courant et d'autre part de la souplesse à l'électrode. Le liant comprend au moins un composé cellulosique et au moins un copolymère styrénique. Le composé cellulosique est de préférence choisi dans le groupe comprenant l'hydroxypropylméthylcellulose (HPMC), le carboxyméthylcellulose (CMC), l'hydroxypropylcellulose (HPC) et l'hydroxyéthylcellulose (HEC). Le copolymère styrénique est de préférence un copolymère bloc styrénique choisi dans le groupe comprenant le Styrène-Butadiène (SBR), Styrène-Isoprène (SI), Styrène-éthylène/butylène (SEB), Styrène-Isoprène/butylène (SIB), Styrène-éthylène/propylène (SEP), Styrène-Butadiène-Styrène (SBS), Styrène-Isoprène-Styrène (SIS), Styrène-éthylène/butylène-Styrène (SEBS), Styrène-Isoprène/butylène Styrène (SIBS) et Styrène-éthylène/propylène-Styrène (SEPS). De préférence, le liant polymérique comprend l'hydroxypropylméthylcellulose (HPMC) et le Styrène-Butadiène (SBR) ou le polystyrène acrylate (PSA). Selon un mode de réalisation, le liant est constitué uniquement d'au moins un composé cellulosique et d'au moins un copolymère styrénique.

De préférence, le charbon actif représente de 60 à 93% en poids du mélange de matière active et de liant, le noir de carbone représente de 5 à 20% en poids du mélange de matière active et de liant, l'HPMC représente de 1 à 10% en poids du mélange de matière active et de liant et le SBR représente de 1 à 10% en poids du mélange de matière active et de liant.

De préférence, le collecteur de courant est recouvert d'une première couche d'accrochage comprenant du carbone. Cette couche d'accrochage est présente entre le collecteur de courant et le mélange et peut être réalisée par des méthodes connues de l'homme du métier, par exemple par enduction d'une encre, par dépôt en phase gazeuse, par pyrolyse d'un polymère carboné ou par dépôt par plasma. Cette couche d'accrochage permet d'assurer une meilleure adhérence de la pâte sur le collecteur de courant.

La capacité de l'électrode négative est généralement largement excédentaire par rapport à la capacité de l'électrode positive qui n'est utilisée qu'entre 5 et 20%. De plus le potentiel de l'électrode positive est relativement constant en fonction de son état de charge, cela correspond à un terme capacitif (en Farad) de l'électrode positive très élevé. Par conséquent, la capacité du supercondensateur asymétrique est environ égale à celle de l'électrode négative.

L'adhérence de la matière active sur le collecteur de courant est également assurée par les rugosités primaire Ra1 et secondaire Ra2 du collecteur de courant en association avec le mélange de carbone et de liant polymérique. Ce mélange, ayant la texture d'une pâte, et non d'un latex, possède une très bonne tenue mécanique, une fois enduit sur le collecteur de courant. Comme le montre la figure 5c, cette pâte adhère très bien au collecteur de courant, ce qui assure une bonne conductivité.

L'électrolyte du supercondensateur est choisi de telle sorte à être adapté aux compositions des électrodes. L'électrolyte de l'invention est un électrolyte alcalin, tel que l'hydroxyde de potassium (KOH) et/ou l'hydroxyde de lithium (LiOH) et/ou l'hydroxyde de sodium (NaOH), à une concentration supérieure à 6N afin de garantir une forte conductivité ionique. De préférence, l'électrolyte alcalin est l'hydroxyde de potassium (KOH).

Le séparateur utilisé dans l'invention est celui couramment utilisé dans les systèmes de batterie Ni-Cd. Le séparateur peut comprendre un matériau non-tissé en polypropylène (FTR108, Freudenberg) et éventuellement une membrane comprenant du polyéthylène greffé par des groupements acide acrylique (C6, Shanghai Shi Long Hi-Tech).

Le procédé de fabrication de l'électrode de l'invention comprend les étapes suivantes. Tout d'abord, le collecteur de courant ayant une rugosité primaire Ra1 comprise entre 0,8 et 15 µm est mis à disposition.

Dans une première étape, la matière active à base de charbon actif ayant une surface spécifique supérieure ou égale à 500 m$^2$/g est mise à disposition. On ajoute à la matière active le liant en présence d'eau jusqu'à l'obtention d'une pâte. Dans une seconde étape, la pâte est enduite sur le collecteur de courant. Dans une troisième étape, le collecteur de courant enduit de la pâte est compressé ou calandré afin d'obtenir l'électrode. Une dernière étape consiste à sécher l'électrode ainsi fabriquée.

Le supercondensateur asymétrique est assemblé par empilement classique des différentes électrodes et des séparateurs. Un séparateur est intercalé entre une électrode positive et une électrode négative. Ces trois éléments sont mis en place dans un conteneur. L'électrolyte est introduit dans le conteneur soit avant, soit après la mise en place des électrodes et des séparateurs dans le conteneur. Les électrodes positives sont reliées entre elles et constituent la borne de sortie de courant positive du supercondensateur et les électrodes négatives sont reliées entre elles et constituent la borne de sortie de courant négative du supercondensateur. Le conteneur est fermé de manière étanche par un couvercle. En général, le couvercle supporte les bornes de sortie de courant.

Le supercondensateur de l'invention peut être utilisé dans différentes applications industrielles, dans le domaine des chemins de fer et dans celui des marchés de stockage de l'énergie.

EXEMPLES

Trois collecteurs de courant sont mis à disposition, un premier collecteur de courant dit lisse et deux collecteurs de courant selon l'invention de rugosités différentes. Le collecteur de courant est dit lisse lorsque sa rugosité primaire Ra1 est inférieure à 0,8 µm. Les rugosités primaires Ra1 et secondaire Ra2 ont été mesurées à l'aide d'un microscope confocal à balayage. La méthode de mesure est illustrée par le schéma de la figure 4. Les résultats des mesures de rugosité obtenues sont présentés dans le tableau 2.

Tableau 2 : mesures de rugosités primaires et secondaires

| Type de collecteur à base de nickel | Rugosité primaire Ra1 (µm) | Rugosité secondaire Ra2 (µm) |
|---|---|---|
| Dit lisse | 0,73 | 0,11 |
| Selon l'invention (rugosité élevée) | 2,34 | 0,21 |
| Selon l'invention (rugosité plus faible) | 1,23 | 0,10 |

L'adhérence du revêtement sur chacun des trois collecteurs de courant est évaluée par un test mécanique dit « essai de quadrillage » décrit dans la norme NF EN ISO 2409 et illustré par la figure 5. Le principe de la mesure consiste à effectuer un quadrillage du collecteur de courant 1 recouvert du mélange 2 comprenant le charbon actif et le liant en réalisant des incisions parallèles et perpendiculaires dans le revêtement à l'aide d'un outil coupant à plusieurs lames avec arêtes de guidage et d'espacement. Un ruban adhésif 52 (type Tesa N4575) est ensuite appliqué sur le quadrillage parallèlement à l'une des séries d'incisions. Dans les cinq minutes qui suivent l'application du ruban, ce dernier est retiré en prenant l'extrémité libre et en arrachant en 0,5 s à 1 s, à vitesse constante et sous un angle θ aussi proche que possible de 60° selon le schéma de la figure 5a. L'adhérence du mélange 2 sur le collecteur de courant 1 est évaluée en fonction de la surface arrachée avec le ruban adhésif 52 selon la classification de la figure 5b et du tableau 1. Les images de la surface des électrodes testées sont présentées sur la figure 5c où le collecteur de courant 1 et le mélange 2 comprenant la matière active et le liant de chacun des différents collecteurs est observable. Il apparaît alors clairement que la matière active déposée sur un collecteur de courant dit lisse n'est pas adhérente, et est partiellement arrachée lors du test de quadrillage. Les mesures d'adhérence fournissent les résultats détaillés dans le tableau 3 suivant :

Tableau 3 : Classification ISO 2409 de l'électrode après l'essai de quadrillage

| Type de collecteur à base de nickel | Classification ISO 2409 |
|---|---|
| Dit lisse | 5 |
| Selon l'invention (Ra1 = 2,34 µm) | 1 |
| Selon l'invention (Ra1 = 1,23 µm) | 3 |

**EP 2 528 076 B1**

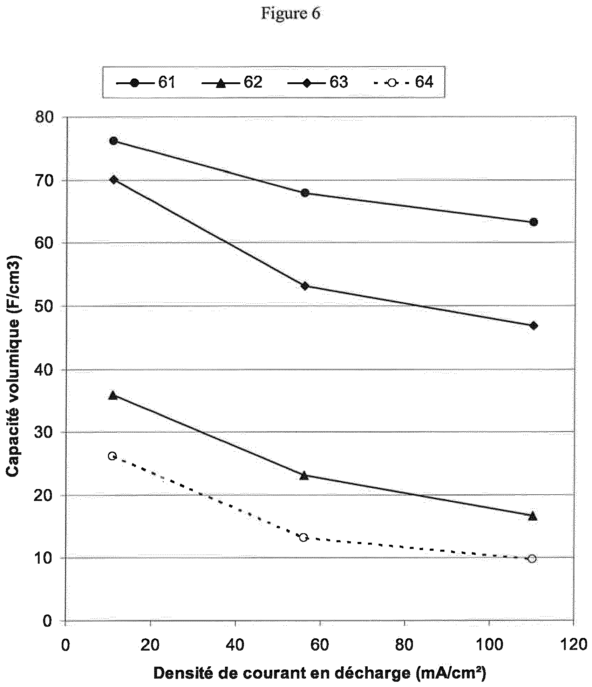

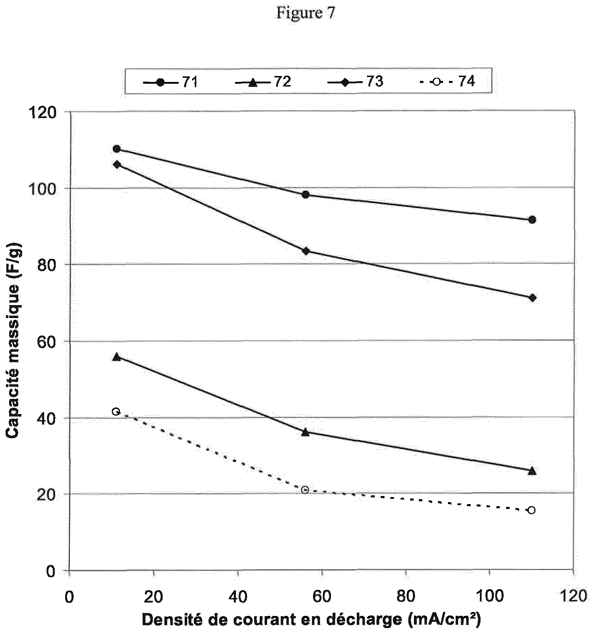

Les capacités volumiques et massiques de différentes électrodes ont été mesurées en fonction de la densité de courant en décharge. Les résultats sont présentés sur les courbes des figures 6 et 7. Les courbes 61 et 71 ont été obtenues à partir d'une électrode possédant un revêtement avec HPMC et SBR sur un collecteur de courant selon l'invention présentant une rugosité élevée (Ra1 = 2,34 $\mu$m). Les courbes 62 et 72 ont été obtenues à partir d'une électrode possédant un revêtement avec HPMC et SBR sur un collecteur de courant dit lisse. Les courbes 63 et 73 ont été obtenues à partir d'une électrode possédant un revêtement avec HPMC et SBR sur un collecteur de courant selon l'invention présentant une rugosité plus faible (Ra1 = 1,23 $\mu$m). Les courbes 64 et 74 ont été obtenues à partir d'une électrode avec un revêtement à base de PTFE sur un collecteur de courant selon l'invention présentant une rugosité élevée (Ra1 = 2,34 $\mu$m).

Au regard de ces courbes, il apparait clairement que les capacités volumiques et massiques sont plus élevées lorsque le liant polymérique pour le revêtement du collecteur de courant de rugosité Ra selon l'invention ne contient pas de PTFE mais un mélange de composé cellulosique et de copolymère styrénique. En effet, la capacité volumique avec un revêtement à base de PTFE ne dépasse pas 28 F/cm$^3$ alors que la capacité volumique avec un revêtement selon l'invention dépasse 75 F/cm$^3$. La nature du liant utilisé est importante et a une influence sur les performances de l'électrode. En éliminant le latex de la matière active, les capacités de l'électrode sont très largement améliorées.

Les figures 6 et 7 permettent également de comparer différents collecteurs de courant revêtus du mélange selon l'invention. Il apparait alors de ces courbes, que le collecteur de courant dit lisse présente des capacités volumiques et massiques beaucoup plus faibles que celles des collecteurs de rugosité selon l'invention. De plus, les courbes des figures 6 et 7 font apparaître que l'électrode avec le collecteur de courant ayant la rugosité la plus importante donne de meilleures capacités volumiques et massiques que l'électrode possédant le collecteur de courant ayant une rugosité plus faible. Le paramètre de rugosité du collecteur de courant a une influence importante et permet d'améliorer sensiblement les performances de l'électrode contenant ledit collecteur de courant.

Bien entendu, la présente invention n'est pas limitée aux exemples et au mode de réalisation décrits et représentés, mais elle est susceptible de nombreuses variantes accessibles à l'homme du métier.

**Revendications**

1.  Electrode de supercondensateur comprenant un collecteur continu de courant (1) où 50% ou plus de la surface dudit collecteur présente une rugosité Ral comprise entre 0,8 et 15 $\mu$m, mesurée pour une longueur de base comprise entre 2 et 200 $\mu$m, ce collecteur étant revêtu d'un mélange (2) comprenant :

    a) du charbon actif ayant une surface spécifique supérieure ou égale à 500 m$^2$/g ;
    b) un liant comprenant un mélange d'au moins un composé cellulosique et au moins un copolymère styrénique.

2.  Electrode de supercondensateur selon la revendication 1, dans laquelle la rugosité Ral est comprise entre 1 et 5 $\mu$m, de préférence entre 1,2 et 3 $\mu$m.

3.  Electrode de supercondensateur selon la revendication 1 ou 2, dans laquelle le collecteur de courant présente une rugosité Ra2 comprise entre 0,1 et 0,5 $\mu$m, mesurée pour une longueur de base supérieure ou égale à 0,1 $\mu$m et strictement inférieure à 2 $\mu$m, sur au moins 50% de sa surface.

4.  Electrode de supercondensateur selon l'une des revendications 1 à 3, dans laquelle 75% ou plus, de préférence 90% ou plus, de préférence encore, 95% ou plus de la surface de collecteur de courant présente une rugosité Ral comprise entre 0,8 et 15 $\mu$m.

5.  Electrode de supercondensateur selon l'une des revendications 1 à 4, dans laquelle le charbon actif présente une surface spécifique supérieure ou égale à 1000 m$^2$/g, de préférence supérieure ou égale à 1400 m$^2$/g.

6.  Electrode de supercondensateur selon l'une des revendications 1 à 5, dans laquelle le mélange comprend un composé carboné autre que du charbon actif, choisi dans le groupe comprenant le noir de carbone, le carbone vitreux, le graphite et le brai de pétrole, de préférence le noir de carbone.

7.  Electrode de supercondensateur selon l'une des revendications 1 à 6, dans laquelle le matériau du collecteur continu de courant est choisi parmi le nickel, un alliage à base de nickel, le cuivre, un alliage à base de cuivre, l'aluminium, un alliage à base d'aluminium, l'acier inox et l'acier nickelé, de préférence le nickel ou un alliage à base de nickel.

8.  Electrode de supercondensateur selon l'une des revendications 1 à 7, dans laquelle le liant ne contient pas de polytétrafluoroéthylène (PTFE).

9. Electrode de supercondensateur selon l'une des revendications 1 à 8, dans laquelle le liant consiste en un mélange d'au moins un composé cellulosique et au moins un copolymère styrénique.

10. Electrode de supercondensateur selon l'une des revendications 1 à 9, dans laquelle le copolymère styrénique est le Styrène-Butadiène (SBR) et le composé cellulosique est l'hydroxypropylméthylcellulose (HPMC).

11. Electrode de supercondensateur selon l'une des revendications 1 à 10, dans laquelle le mélange comprend de 60 à 93% en poids de charbon actif, de 5 à 20% en poids de noir de carbone, de 1 à 10% en poids de composé cellulosique et de 1 à 10 % en poids de copolymère styrénique.

12. Electrode de supercondensateur selon l'une des revendications 1 à 11, dans laquelle une couche d'accrochage comprenant du carbone est présente entre le collecteur de courant et le mélange.

13. Supercondensateur asymétrique comprenant :

a) au moins une électrode positive comprenant un hydroxyde à base de nickel et un collecteur de courant à base de nickel ;
b) au moins une électrode négative comprenant un collecteur continu de courant (1) où 50% ou plus de la surface dudit collecteur présente une rugosité Ral comprise entre 0,8 et 15 $\mu$m, mesurée pour une longueur de base comprise entre 2 et 200 $\mu$m, ce collecteur étant revêtu d'un mélange (2) comprenant :

a) du charbon actif ayant une surface spécifique supérieure ou égale à 500 m$^2$/g ;
b) un liant comprenant un mélange d'au moins un composé cellulosique et au moins un copolymère styrénique ;

c) un électrolyte alcalin ;
d) au moins un séparateur.

14. Supercondensateur asymétrique selon la revendication 13, dans lequel le séparateur comprend un matériau non-tissé en polypropylène et éventuellement une membrane en polyéthylène greffé par des groupements acide acrylique.

15. Procédé de fabrication d'une électrode comprenant les étapes suivantes :

a) mise à disposition d'un collecteur continu de courant (1) dont au moins 50% de sa surface présente une rugosité comprise entre 0,8 et 15 $\mu$m, mesurée pour une longueur de base comprise entre 2 et 200 $\mu$m ;
b) mélange (2) de charbon actif de surface spécifique supérieure ou égale à 500 m$^2$/g avec :

- un liant comprenant un mélange d'au moins un composé cellulosique et au moins un copolymère styrénique et
- de l'eau jusqu'à obtention d'une pâte ;

c) dépôt de la pâte obtenue à l'étape b) sur le collecteur de courant de l'étape a);
d) compression ou calandrage du collecteur de courant revêtu de la pâte pour former une électrode ;
e) séchage de l'électrode obtenue à l'étape d),

dans lequel l'électrode est selon l'une des revendications 1 à 12.

**Patentansprüche**

1. Elektrode eines Superkondensators, umfassend einen kontinuierlichen Stromkollektor (1), wobei 50% oder mehr der Oberfläche des Kollektors eine Rauheit Ral zwischen 0,8 und 15$\mu$m aufweisen, die für eine Grundlänge zwischen 2 und 200$\mu$m gemessen ist, wobei dieser Kollektor mit einer Mischung (2) beschichtet ist, umfassend:

a) Aktivkohle mit einer spezifischen Oberfläche, die größer als oder gleich 500m$^2$/g ist;

b) ein Bindemittel, umfassend eine Mischung aus mindestens einer Zelluloseverbindung und mindestens einem Styrolcopolymer.

2. Elektrode eines Superkondensators nach Anspruch 1, wobei die Rauheit Ral zwischen 1 und 5 $\mu$m, vorzugsweise zwischen 1, 2 und 3 $\mu$m beträgt.

3. Elektrode eines Superkondensators nach Anspruch 1 oder 2, wobei der Stromkollektor eine Rauheit Ra2 zwischen 0,1 und 0,5 $\mu$m, die für eine Grundlänge, die größer als oder gleich 0,1 $\mu$m und streng niedriger als 2 $\mu$m ist, gemessen ist, auf mindestens 50% seiner Oberfläche aufweist.

4. Elektrode eines Superkondensators nach einem der Ansprüche 1 bis 3, wobei 75% oder mehr, vorzugsweise 90% oder mehr, noch bevorzugter 95% oder mehr der Oberfläche des Stromkollektors eine Rauheit Ral zwischen 0,8 und 15 $\mu$m aufweisen.

5. Elektrode eines Superkondensators nach einem der Ansprüche 1 bis 4, wobei die Aktivkohle eine spezifische Oberfläche aufweist, die größer als oder gleich 1.000 m$^2$/g, vorzugsweise größer als oder gleich 1.400 m$^2$/g ist.

6. Elektrode eines Superkondensators nach einem der Ansprüche 1 bis 5, wobei die Mischung eine andere Kohlenstoffverbindung als Aktivkohle umfasst, ausgewählt aus der Gruppe, umfassend Ruß, Glaskohlenstoff, Graphit und Erdölpech, vorzugsweise Ruß.

7. Elektrode eines Superkondensators nach einem der Ansprüche 1 bis 6, wobei das Material des kontinuierlichen Stromkollektors aus Nickel, einer Legierung auf Nickelbasis, Kupfer, einer Legierung auf Kupferbasis, Aluminium, einer Legierung auf Aluminiumbasis, rostfreiem Stahl und vernickeltem Stahl, vorzugsweise Nickel oder einer Legierung auf Nickelbasis, ausgewählt ist.

8. Elektrode eines Superkondensators nach einem der Ansprüche 1 bis 7, wobei das Bindemittel kein Polytetrafluorethylen (PTFE) enthält.

9. Elektrode eines Superkondensators nach einem der Ansprüche 1 bis 8, wobei das Bindemittel aus einer Mischung aus mindestens einer Zelluloseverbindung und mindestens einem Styrolcopolymer besteht.

10. Elektrode eines Superkondensators nach einem der Ansprüche 1 bis 9, wobei das Styrolcopolymer Styrol-Butadien (SBR) ist und die Zelluloseverbindung Hydroxypropylmethylcellulose (HPMC) ist.

11. Elektrode eines Superkondensators nach einem der Ansprüche 1 bis 10, wobei die Mischung von 60 bis 93 Gew.% Aktivkohle, von 5 bis 20 Gew.% Ruß, von 1 bis 10 Gew.% Zelluloseverbindung und von 1 bis 10 Gew.% Styrolcopolymer umfasst.

12. Elektrode eines Superkondensators nach einem der Ansprüche 1 bis 11, wobei eine Befestigungsschicht, die Kohlenstoff umfasst, zwischen dem Stromkollektor und der Mischung vorhanden ist.

13. Asymmetrischer Superkondensator, umfassend:

a) mindestens eine positive Elektrode, umfassend ein Hydroxid auf Nickelbasis und einen Stromkollektor auf Nickelbasis;
b) mindestens eine negative Elektrode, umfassend einen kontinuierlichen Stromkollektor (1), wobei 50% oder mehr der Oberfläche des Kollektors eine Rauheit Ral zwischen 0,8 und 15 $\mu$m aufweisen, die für eine Grundlänge zwischen 2 und 200 $\mu$m gemessen ist, wobei dieser Kollektor mit einer Mischung (2) beschichtet ist, umfassend:

- Aktivkohle mit einer spezifischen Oberfläche, die größer als oder gleich 500 m$^2$/g ist;
- ein Bindemittel, umfassend eine Mischung aus mindestens einer Zelluloseverbindung und mindestens einem Styrolcopolymer;

c) einen alkalischen Elektrolyten;
d) mindestens einen Separator.

14. Asymmetrischer Superkondensator nach Anspruch 13, wobei der Separator ein Vliesmaterial aus Polypropylen und gegebenenfalls eine Membran aus mit Acrylsäuregruppen gepfropftem Polyethylen umfasst.

15. Verfahren zur Herstellung einer Elektrode, umfassend die folgenden Schritte:

a) Bereitstellen eines kontinuierlichen Stromkollektors (1), wovon mindestens 50% seiner Oberfläche eine Rauheit zwischen 0,8 und 15$\mu$m aufweisen, die für eine Grundlänge zwischen 2 und 200$\mu$m gemessen ist;
b) Mischen (2) von Aktivkohle mit einer spezifischen Oberfläche, die größer als oder gleich 500m$^2$/g ist, mit:

- einem Bindemittel, umfassend eine Mischung aus mindestens einer Zelluloseverbindung und mindestens einem Styrolcopolymer und
- Wasser bis zum Erhalten von einer Paste;

c) Auftragen der Paste, die in Schritt b) erhalten wird, auf dem Stromkollektor des Schrittes a);
d) Komprimieren oder Kalandrieren des Stromkollektors, der mit der Paste beschichtet wird, um eine Elektrode zu bilden;
e) Trocknen der Elektrode, die in Schritt d) erhalten wird,

wobei die Elektrode nach einem der Ansprüche 1 bis 12 ist.

## Claims

1. A supercapacitor electrode comprising a continuous current collector (1) wherein 50% or more of the surface of said collector exhibits a roughness Ra1 comprised between 0.8 and 15 $\mu$m, measured for a base length comprised between 2 and 200 $\mu$m, said collector being coated with a mixture (2) comprising:

a) active carbon having a specific surface area greater than or equal to 500 m$^2$/g;
b) a binder composed of a mixture of at least one cellulosic compound and at least one styrenic copolymer.

2. The supercapacitor electrode according to claim 1, wherein roughness Ra1 is comprised between 1 and 5 $\mu$m, preferably between 1.2 and 3 $\mu$m.

3. The supercapacitor electrode according to claim 1 or 2, wherein the current collector exhibits on at least 50% of its surface area a roughness Ra2 comprised between 0.1 and 0.5 $\mu$m, measured for a base length greater than or equal to 0.1 $\mu$m and strictly less than 2 $\mu$m.

4. The supercapacitor electrode according to any of claims 1 to 3, wherein 75% or more, preferably 90% or more, still preferably 95% or more, of the surface area of the current collector exhibits a roughness Ra1 comprised between 0.8 and 15 $\mu$m.

5. The supercapacitor electrode according to any of claims 1 to 4, wherein the active carbon exhibits a specific surface area greater than or equal to 1,000 m$^2$/g, preferably greater than or equal to 1,400 m$^2$/g.

6. The supercapacitor electrode according to any of claims 1 to 5, wherein the mixture also includes a carbon compound other than active carbon, selected from the group comprising carbon black, glassy carbon, graphite and petroleum pitch, preferably carbon black.

7. The supercapacitor electrode according to any of claims 1 to 6, wherein the material of the continuous current collector is selected from among nickel or a nickel-based alloy, copper or a copper-based alloy, aluminium or an aluminium-based alloy, stainless steel and nickel-plated steel, preferably nickel or a nickel-based alloy.

8. The supercapacitor electrode according to any of claims 1 to 7, wherein the binder does not contain any polytetrafluoroethylene (PTFE).

9. The supercapacitor electrode according to any of claims 1 to 8, wherein the binder consists of a mixture of at least one of a mixture of at least one cellulosic compound and at least one styrenic copolymer.

10. The supercapacitor electrode according to any of claims 1 to 9, wherein the styrenic copolymer is styrene-butadiene rubber (SBR) and the cellulosic compound is hydroxypropylmethylcellulose (HPMC).

11. The supercapacitor electrode according to any of claims 1 to 13, wherein the mixture comprises 60 to 93% by weight of active carbon, 5 to 20% by weight of carbon black, 1 to 10% by weight of the cellulosic compound and 1 to 10% by weight of styrenic copolymer.

12. The supercapacitor electrode according to any of claims 1 to 11, wherein a tack coating comprising carbon is present between the current collector and the mixture.

13. An asymmetric supercapacitor comprising:

a) at least one positive electrode comprising a nickel-based hydroxide and one nickel-based current collector;
b) at least one negative electrode comprising a continuous current collector (1) wherein 50% or more of the surface of said collector exhibits a roughness Ra1 comprised between 0.8 and 15 $\mu$m, measured for a base length comprised between 2 and 200 $\mu$m, said collector being coated with a mixture (2) comprising:

a) active carbon having a specific surface area greater than or equal to 500 m$^2$/g;
b) a binder composed of a mixture of at least one cellulosic compound and at least one styrenic copolymer;

c) an alkaline electrolyte;
d) at least one separator.

14. The asymmetric supercapacitor according to claim 13, wherein the separator comprises a non-woven polypropylene material and optionally a polyethylene membrane grafted with acrylic acid groups.

15. A method for manufacturing an electrode comprising the following steps:

a) providing a current collector (1) which exhibits on at least 50% of its surface area a roughness comprised between 0.8 and 15 $\mu$m, measured for a base length comprised between 2 $\mu$m and 200 $\mu$m;
b) mixing (2) active carbon having a specific surface area greater than or equal to 500 m$^2$/g with;

- a binder comprising a mixture of at least one cellulosic compound and at least one styrenic copolymer and
- water until a paste is formed;

c) depositing the paste obtained in step b) onto the current collector of step a);
d) compressing or calendering the paste-coated current collector in order to form an electrode;
e) drying the electrode obtained in step d).

wherein the electrode is according to any of claims 1 to 12.

Figure 1a

$EL_1$ ($C_1$)                    $EL_2$ ($C_2$)

Figure 1b

$EL_1$ ($C_1$)                    $EL_2$ ($C_2$)

Figure 2

Figure 3

31

Longueur de base

Ra

31

32

Ligne moyenne

m

Figure 4

Figure 5a

Figure 5b

| Classification | Aspect de la partie quadrillée pour laquelle un écaillage s'est produit (Exemple de six incisions parallèles) |
|:---:|:---:|
| 0 | — |
| 1 | |
| 2 | |
| 3 | |
| 4 | |
| 5 | — |

Figure 5c

| | Classification ISO 2409 | Aspect de l'électrode après test de quadrillage |
|---|---|---|
| Collecteur dit lisse<br>**Ra1 = 0,73 µm**<br>**Ra2 = 0,11 µm** | 5 | |
| Collecteur de rugosité selon l'invention<br>**Ra1 = 2,34 µm**<br>**Ra2 = 0,21 µm** | 1 | |
| Collecteur de rugosité intermédiaire<br>**Ra1 = 1,23 µm**<br>**Ra2 = 0,10 µm** | 3 | |

Figure 6

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1883937 A
- US 6356432 B
- EP 1156500 A
- WO 2008067337 A
- US 7576971 B
- US 6252762 B
- RU 2296383
- US 5986876 A
- US 20080003503 A
- US 20060068296 A
- JP 2007066836 A
- EP 0750358 A
- US 20090208839 A
- EP 1447867 A
- US 20110014508 A
- EP 2093191 A

**Littérature non-brevet citée dans la description**

- Quantitative Surface Characterisation Using Laser Scanning Confocal Microscopy. **TOMOVICH ; PENG ; YUAN ; YAN.** Laser Scanning, Theory and Applications
- **P. P. BHATTACHARJEE et al.** *Scripta Materialia,* 2007, vol. 56, 13-16